# EUROPÄISCHE PATENTSCHRIFT

(11) **EP 2 184 568 B1**
(45) Veröffentlichungstag und Bekanntmachung des Hinweises auf die Patenterteilung: **31.08.2016**
(21) Anmeldenummer: 09174035.7
(22) Anmeldetag: 26.10.2009
(51) Int. Cl.: B60H 1/32

(54) **Vorrichtung zur Regelung eines Kältekreislaufs für eine Kraftfahrzeug-Klimaanlage**
Method for regulating a coolant circuit for a motor vehicle air conditioning system
Dispositif de réglage d'un circuit de refroidissement pour la climatisation d'un véhicule automobile

(30) Priorität: 06.11.2008 DE 102008056149
(43) Veröffentlichungstag der Anmeldung: 12.05.2010
(73) Patentinhaber: Behr-Hella Thermocontrol GmbH, 70469 Stuttgart (DE)
(72) Erfinder: Trapp, Ralph, 33102, Paderborn (DE)
(74) Vertreter: dompatent von Kreisler Selting Werner - Partnerschaft von Patent- und Rechtsanwälten mbB

(56) Entgegenhaltungen:
- EP-A1- 1 564 049
- US-A- 4 667 480
- US-A- 6 145 330
- US-A1- 2002 194 856

## Beschreibung

Die Erfindung betrifft eine Vorrichtung zur Regelung eines Kältekreislaufs für eine Kraftfahrzeug-Klimaanlage, wobei der Kältekreislauf einen elektrisch angetriebenen Verdichter aufweist.

Derartige Vorrichtungen sind z. B. aus EP-A-1 564 049, US-A-6 145 330 und US-A-2002/194856 bekannt.

Der Kältebedarf zum Klimatisieren eines Kraftfahrzeuges wird im Regelfall mit Hilfe eines Kältekreislaufs erzeugt. Dazu werden bei heutigen Klimatisierungseinrichtungen Kältekreise auf Basis eines Carnot-Prozesses eingesetzt. Hierbei wird ein verdichtetes Kältemittel über ein Drosselorgan expandiert und die flüssige Phase des Kältemittels in einem Verdampfer verdampft. Für die Verdampfung wird eine Energiemenge benötigt, die der Umgebung entzogen wird. Dies geschieht gezielt über die äußere Oberfläche des Verdampfers. Damit lässt sich die Klimatisierungsnutzluft kühlen.

Die Kompression des Kältemittels in einem solchen Kältekreis erfolgt üblicherweise mit Hilfe eines Verdichters, der über einen Riemenantrieb mit dem Verbrennungsmotor mechanisch gekoppelt ist. Seit einigen Jahren sind sogenannte extern geregelte Verdichter im Einsatz, die aus Gründen der Energieeffizienz ein einstellbares Hubvolumen haben. Dieses Hubvolumen wird in Abhängigkeit von der benötigten Kälteleistung über ein Ventil eingestellt. Hierbei wird der Ventilstrom unter anderem in Abhängigkeit vor der aktuellen Lufttemperatur hinter dem Verdampfer geregelt, und zwar durch einen Regler, der in einem in der Instrumententafel des Fahrzeuges untergebrachten Klimasteuergerät angeordnet ist. Je nach Umgebungsbedingungen und benötigter Kälteleistung stellt sich auf diese Weise ein passender Kältemittelstrom ein. Bei Fahrzeugen mit Standklimatisierung oder Fahrzeugen mit Hybrid- oder reinen Elektroantrieben ist es sinnvoll bzw. erforderlich, den Verdichter separat anzutreiben. Dies geschieht in der Regel mit Hilfe eines Elektromotors, der aus einer Batterie versorgt wird. Hierzu wird anstelle eines Ventilstromes meist ein zur Motor- bzw. Verdichterdrehzahl äquivalentes Signal von dem Klimasteuergerät zum Verdichter übertragen. Dies kann eine Busbotschaft oder ein analoges elektrisches Signal sein. Die Regelung der Lufttemperatur nach dem Verdampfer geschieht nach wie vor in dem Klimasteuergerät nach dem bekannten Verfahren.

Aufgabe der Erfindung ist es, eine Vorrichtung zur Regelung eines Kältekreislaufs für eine Kraftfahrzeug-Klimaanlage zu schaffen, bei der der Verdichter über einen Elektromotor angetrieben wird und bei der der Verkabelungsaufwand für die Regelung des Kältekreislaufs minimiert ist.

Zur Lösung dieser Aufgabe wird mit der Erfindung eine Vorrichtung zur Regelung eines Kältekreislaufs für eine Kraftfahrzeug-Klimaanlage vorgeschlagen, wobei die Vorrichtung versehen ist mit den Merkmalen des Anspruchs 1. Einzelne Ausgestaltungen der Erfindung sind Gegenstand der Unteransprüche.

Wesensmerkmal der Erfindung ist der Ansatz, die Elektronik für die Regelung der Lufttemperatur nach dem Verdampfer bei elektrisch betriebenen Verdichtern durch eine nahe dem Verdichter untergeordnete Elektronik durchzuführen. Damit der elektrisch betriebene Verdichter angesteuert werden kann, ist es sinnvoll, entsprechende Elektronik in Form von Leistungstreibern und eines Mikrocontrollers, der die Drehzahl des Motors regelt und die Buskommunikation abwickelt, in den Verdichter zu integrieren. Wenn hierbei die Sensorik des Kältekreislaufes in Form des Verdampfertemperatursensors, des Kältemitteldrucksensors und ggf. des Kältemitteltemperatursensors mit dieser Elektronik verbunden wird, kann auch die Regelung des Kältekreislaufes von dem Mikrocontroller im Verdichter übernommen werden. Da der Verdichter über den Elektromotor direkt angetrieben wird, entfällt somit die Anpassung des Hubvolumens und damit auch das für den energieeffizienten Betrieb des Verdichters erforderliche Ventil. Während heutzutage die Sensorleitung des Verdampfertemperatursensors, des Hochdrucksensors, der zur Überwachung des Kältemitteldrucks dient, sowie die Leitungen zum Verdichterventil vom Motorraum durch die sogenannte Spritzwand zum Klimasteuergerät in die Fahrzeugkabine verlegt werden müssen, würde nach der Erfindung diese Verkabelung deutlich aufwandgünstiger und könnte vollständig im Motorraum durchgeführt werden. Die Sollvorgabe und die Diagnose könnten so vollständig über Bussignale abgewickelt werden.

Mit der Erfindung wird also der Gedanke verfolgt, den Verdampfertemperaturregler aus dem Klimasteuergerät heraus zum Verdichter bzw. dessen Elektromotor zu verlagern. Sämtliche für die Verdampfertemperaturregelung erforderlichen Messgrößen und Komponenten können nun auf einfache Art und Weise mit dem ausgelagerten Verdampfertemperaturregler elektrisch verbunden werden, wobei mit Ausnahme der Verdampfertemperatursollwert-Vorgabe keine weiteren Leitungen vom Klimasteuergerät zum Verdichter bzw. Elektromotor geführt werden müssen. Das reduziert signifikant den Montageaufwand, was die Verkabelung anbelangt.

Typischerweise ist die Verdampfertemperatursollwert-Ermittlungseinheit zur Anordnung in einem Klimasteuergerät zur Unterbringung im Innenraum eines Kraftfahrzeuges als Teil eines Innenraumtemperaturreglers vorgesehen.

Die erfindungsgemäße Vorrichtung kann ferner mit Vorteil einen Drucksensor zur Messung des Drucks des verdichteten Kältemittels und einen. Kältemitteldruckregler zur Regelung des Kältemitteldrucks auf einen Sollwert aufweisen, wobei der Drucksensor mit der elektrischen Schaltung verbunden ist und die elektrische Schaltung den Kältemitteldruckregler aufweist.

Es kann ferner ein weiterer Temperatursensor zur Überwachung der Kältemitteltemperatur vorgesehen sein, wobei der weitere Temperatursensor mit der elektrischen Schaltung verbunden ist und diese eine Überwachungseinheit zur Überwachung der Kältemitteltemperatur aufweist.

Die Erfindung verkörpert sich ferner auch in einem Kraftfahrzeug, das versehen ist mit
- einem Motorraum und einem Innenraum, die durch eine Wand voneinander getrennt sind, und
- einer Vorrichtung nach einem der hervorgehenden Ansprüche,
- wobei der Verdichter mit Elektromotor und elektrischer Schaltung im Motorraum und der Sollwertgeber für die Verdampfertemperatur im Innenraum angeordnet ist.

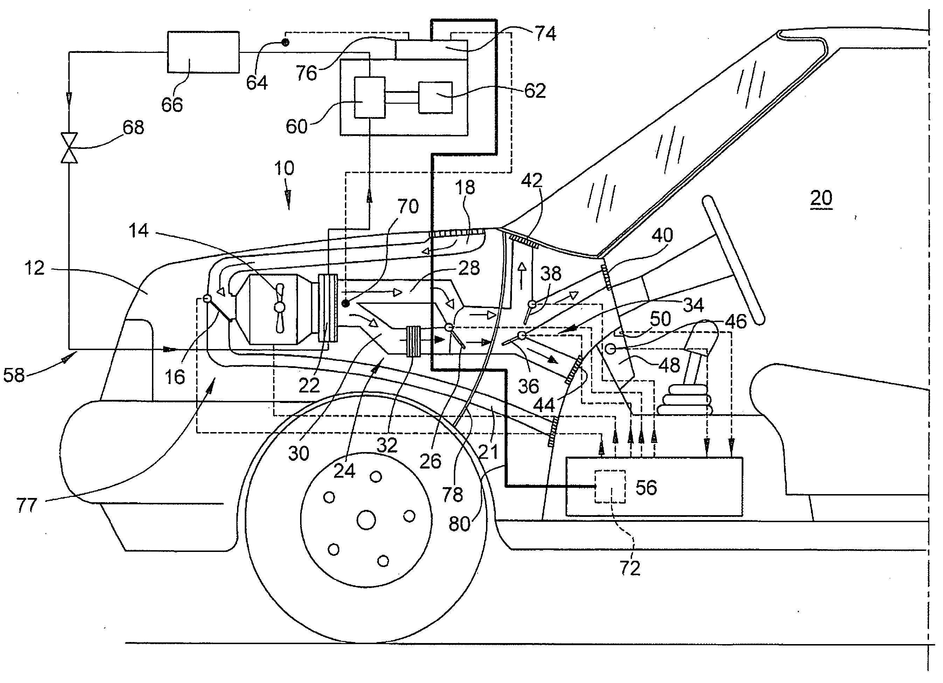

Die Erfindung wird nachfolgend unter Bezugnahme auf die Zeichnung, die schematisch eine Klimaanlage eines Kraftfahrzeuges zeigt, näher erläutert.

Gemäß der Zeichnung weist eine Klimaanlage 10 für ein Kraftfahrzeug 12 ein Gebläse 14 auf, das in Abhängigkeit von der Stellung einer Frischluft-/Umluftklappe 16 Frischluft aus einem Frischluft-Ansaugkanal 18 oder Umluft aus einem im Innenraum 20 endenden Umluftkanal 21 ansaugt. In Strömungsrichtung betrachtet hinter dem Gebläse 14 befindet sich eine Kühlvorrichtung, die einen Verdampfer 22 zum Abkühlen der Ansaugluft aufweist, der Bestandteil eines Kältekreislaufs ist, auf den weiter unten näher eingegangen wird.

Hinter dem Verdampfer 22 ist eine (in diesem Beispiel luftseitig gesteuerte) Heizvorrichtung 24 angeordnet. Die abgekühlte Luft durchströmt in Abhängigkeit von der Stellung einer das Stellglied der Heizvorrichtung 24 bildenden Mischklappe 26 einen von zwei zueinander parallel geschalteten Kanälen 28,30 der Heizvorrichtung 24. Bei Fahrzeugen mit Verbrennungsmaschinen oder Hybridantrieben weist einer dieser beiden Kanäle (im Ausführungsbeispiel der Kanal 30) einen von einem Teil des Motorkühlwassers durchströmten Wärmetauscher 32 zum Erwärmen der zuvor abgekühlten Luft auf. Bei Elektro-Fahrzeugen ist die Heizung ggf. elektrisch bzw. entfällt ggf. die Mischklappe. Hinter dem Wärmetauscher 32 sind die beiden Kanäle 28,30 wieder zusammengeführt. In Strömungsrichtung hinter der Mischklappe 26 schließt sich eine Luftverteilvorrichtung 34 an, die zwei Klappen 36,38 aufweist, um die Luft wahlweise über die Mannanströmöffnung 40, die Defrosteröffnungen 42 und/oder die Fußraumausströmöffnungen 44 in den Innenraum 20 einzulassen.

Die Steuerung der gesamten Klimaanlage 10 erfolgt dergestalt, dass eine vorgebbare Solltemperatur für den Innenraum 20 erreicht und gehalten wird. Zu diesem Zweck weist die Klimaanlage 10 einen Innenraum-Temperaturfühler 46 auf, der den Istwert der Innenraumtemperatur misst und z.B. im Steuergerät 48 untergebracht ist. Das Steuergerät 48 verfügt unter anderem über eine Einstellvorrichtung 50 zur manuellen Vorgabe des Sollwerts für die Innenraumtemperatur.

Darüber hinaus weist die Klimaanlage 10 eine Vielzahl weiterer hier nicht näher beschriebener Sensoren für beispielsweise die Außentemperatur, die Kühlwassertemperatur, die Schadstoffkonzentration in der Frischluft, etc. auf. Sämtliche dieser Sensoren sind mit einer zentralen Steuereinheit 56 verbunden, die zumindest einen Ausblastemperaturregler und insbesondere einen Innenraumtemperaturregler mit unterlagerter Ausblastemperaturregelung aufweist und ihrerseits mit den Stellgliedern für die Kühlvorrichtung, die Heizvorrichtung 24, das Gebläse 14 sowie die Klappen 16,26,36,38 verbunden ist.

Wie bereits oben erwähnt, ist der Verdampfer 22 Bestandteil eines Kältekreislaufs 58, wie er schematisch in der Zeichnung eingezeichnet ist. Der Kältekreislauf 58 umfasst ferner einen Verdichter 60, der von einem Elektromotor 62 angetrieben wird. In dem Verdichter 60 wird ein Kältemittel komprimiert, dessen Druck durch einen Kältemitteldrucksensor 64 gemessen wird. Nach Passieren eines Kondensators 66 (Kühler zum Abkühlen des verdichteten Kältemittels) und eines Expansionsventils 68 gelangt das dann expandierte Kältemittel in den Verdampfer 22, in dem es unter Entzug von Energie aus der Umgebung verdampft. Danach gelangt das expandierte und verdampfte bzw. teilweise verdampfte Kältemittel wieder zum Verdichter 60.

Wie ebenfalls oben bereits erwähnt, ist der Kältekreislauf 58 geregelt, und zwar hinsichtlich der Verdampfertemperatur, das heißt der Temperatur am Luftauslass des Verdampfers 22 als der Innenraumtemperaturregelung unterlagerter Regelkreis. Die Verdampfertemperatur, genauer die Temperatur der den Verdampfer verlassenden (gekühlten) Luft wird mittels eines Verdampfertemperatursensors 70 erfasst. Der Sollwert für die Verdampfertemperaturregelung wird von dem im Klimasteuergerät 48 untergebrachten Innenraumtemperaturregler vorgegeben und errechnet sich u. a. aus dem Kälteleistungsbedarf, wobei der Innenraumtemperaturregler eine Einheit 72 zur Ermittlung des Verdampfertemperatur-Sollwerts beinhaltet, wie sie in der Zeichnung als Bestandteil des Innenraumtemperaturreglers in der Steuereinheit 56 angedeutet ist. Die Soll- und Istwerte der Verdampfertemperatur werden als Differenzwert einem Verdampfertemperaturregler 74 zugeführt, der den Elektromotor 62 und insbesondere die Drehzahl des Elektromotors 62 und damit den Verdichter 60 steuert.

Wie durch die schematisierte Zeichnung angedeutet, befindet sich die Steuereinheit 56 mit Innenraumtemperaturreglung im Klimasteuergerät 48, das heißt z.B. im Innenraum 20 des Kraftfahrzeuges 12, während sich der Verdampfertemperaturregler 74 als elektrische Schaltung 76 im Motorraum 77 und zwar insbesondere im oder am Gehäuse des Verdichters 60 bzw. des Elektromotors 62 befindet. Während im Falle der Unterbringung des Verdampfertemperaturreglers 74 im Steuergerät 48 sämtliche Leitungen, die zu den für die Verdampfertemperatur erforderlichen Komponenten führen, vom Motorraum durch die sogenannte Spritzwand 78 in den Innenraum 20 zum Klimasteuergerät 48 geführt werden müssen, bedarf es nach dem erfindungsgemäßen Konzept lediglich noch einer einzigen, durch die Spritzwand 78 zu führenden Verbindungsleitung 80 zwischen dem Klimasteuergerät 48 und dem in den Motorraum 77 verlagerten Verdampfertemperaturregler 74. Bei dieser elektrischen Verbindung zwischen Klimasteuergerät 48 und der elektrischen Schaltung 76 des Verdampfertemperaturreglers 74 kann es sich insbesondere um eine Busleitung handeln, die im Regelfall bei dem Kraftfahrzeug 12 zu anderen Zwecken bereits verlegt und damit vorgesehen ist. Somit zeigt sich, dass durch den erfindungsgemäßen Ansatz die Verkabelung zwischen Motorraum 77 und Innenraum 20 des Kraftfahrzeuges 12 reduziert werden kann.

### BEZUGSZEICHENLISTE

- 10: Klimaanlage
- 12: Kraftfahrzeug
- 14: Gebläse
- 16: Frischluft-/Umluftklappe
- 18: Frischluft-Ansaugkanal
- 20: Innenraum
- 21: Umluftkanal
- 22: Verdampfer
- 24: Heizvorrichtung
- 26: Mischklappe
- 28: Kanal
- 30: Kanal
- 32: Wärmetauscher
- 34: Luftverteilvorrichtung
- 36: Luftverteilklappe
- 38: Luftverteilklappe
- 40: Mannanströmöffnung
- 42: Defrosteröffnungen
- 44: Fußraumausströmöffnungen
- 46: Innenraum-Temperaturfühler
- 48: Klimasteuergerät
- 50: Einstellvorrichtung
- 56: Steuereinheit
- 58: Kältekreislauf
- 60: Verdichter
- 62: Elektromotor
- 64: Kältemitteldrucksensor
- 66: Kondensator
- 68: Expansionsventil
- 70: Verdampfertemperatursensor
- 72: Verdampfertemperatursollwert-Ermittlungseinheit
- 74: Verdampfertemperaturregler
- 76: Schaltung
- 77: Motorraum
- 78: Spritzwand
- 80: Verbindungsleitung

## Patentansprüche

1. Vorrichtung zur Regelung eines Kältekreislaufs für eine Kraftfahrzeug-Klimaanlage, mit
- einem Verdichter (60) zum Verdichten eines Kältemittels,
- einem von Luft durchströmbaren Verdampfer (22) zum Verdampfen des verdichteten Kältemittels,
- einem Elektromotor (62) zum Antreiben des Verdichters (60),
- einem Temperatursensor (70) zur Messung der Temperatur der den Verdampfer (22) verlassenden Kühlluft,
- einer Einheit zur Ermittlung eines Sollwerts (72) für die Temperatur der den Verdampfer (22) verlassenden Kühlluft und
- einer elektrischen Schaltung (76) mit einem Verdampfertemperaturregler (74) zur Regelung der Temperatur der Kühlluft auf den von dem Verdampfertemperatursollwert-Ermittlungseinheit (72) vorgegebenen Sollwert,
- wobei die elektrische Schaltung (76) räumlich getrennt von der Verdampfertemperatursollwert-Ermittlungseinheit (72) angeordnet ist ,
**dadurch gekennzeichnet, dass**
- die elektrische Schaltung (76) in oder an einem Gehäuse des Verdichters (60) und/oder des Elektromotors (62) angeordnet ist.

2. Vorrichtung nach Anspruch 1, **dadurch gekennzeichnet, dass** zur Ermittlung eines Sollwerts für die Temperatur für den Verdampfer (22) verlassenden Kühlluft die Verdampfertemperatursollwert-Ermittlungseinheit (72) zur Anordnung in einem Klimasteuergerät (48) zur Unterbringung im Innenraum (20) eines Kraftfahrzeuges als Teil eines Innenraumtemperaturreglers vorgesehen ist.

3. Vorrichtung nach Anspruch 1 oder 2, **gekennzeichnet durch** einen Drucksensor (64) zur Messung des Drucks des verdichteten Kältemittels und einen Kältemitteldruckregler zur Regelung des Kältemitteldrucks auf einen Sollwert, wobei der Drucksensor (64) mit der elektrischen Schaltung (76) verbunden ist und die elektrische Schaltung den Kältemitteldruckregler aufweist.

4. Vorrichtung nach einem der Ansprüche 1 bis 3, **gekennzeichnet durch** einen weiteren Temperatursensor zur Überwachung der Kältemitteltemperatur, wobei der weitere Temperatursensor mit der elektrischen Schaltung (76) verbunden ist und diese eine Überwachungseinheit zur Überwachung der Kältemitteltemperatur aufweist.

5. Vorrichtung nach einem der Ansprüche 1 bis 4, **dadurch gekennzeichnet, dass** die Verdampfertemperatursollwert-Ermittlungseinheit (72) zur Ermittlung eines Sollwerts für die Temperatur für den Verdampfer (22) verlassenden Kühlluft über eine Busleitung (80) mit dem Verdampfertemperaturregler (74) gekoppelt ist.

6. Kraftfahrzeug mit
- einem Motorraum (77) und einem Innenraum (20), die durch eine Wand (78) voneinander getrennt sind, und
- einer Vorrichtung nach einem der hervorgehenden Ansprüche,
- wobei der Verdichter (60) mit Elektromotor (62) und elektrischer Schaltung (76) im Motorraum und die Verdampfertemperatursollwert-Ermittlungseinheit (72) für die Verdampfertemperatur im Innenraum (20) angeordnet ist.

## Claims

1. A device for feedback control of a coolant circuit for a motor vehicle air conditioning system, comprising
- a compressor (60) for compressing a coolant,
- an evaporator (22) designed to have air flowing through it, for evaporating the compressed coolant,
- an electric motor (62) for driving the compressor (60),
- a temperature sensor (70) for measuring the temperature of the cooling air exiting from the evaporator (22),
- a unit (72) for detecting a desired value for the temperature of the cooling air exiting from the evaporator (22),
- an electric circuit (76) comprising an evaporator temperature feedback controller (74) for feedback control of the temperature of the cooling air to the desired value predefined by the evaporator temperature desired value detecting unit (72),
- the electric circuit (76) being spatially separated from the evaporator temperature desired value detecting unit (72),
**characterized in that**
- the electric circuit (76) is arranged in or on a housing of the compressor (60) and/or of the electric motor (62).

2. The device according to claim 1, **characterized in that**, for detection of a desired value for the temperature of the cooling air exiting from the evaporator (22), the evaporator temperature desired value detecting unit (72) is provided to be arranged in an air-conditioning control device (48) for installation in the interior (20) of a motor vehicle as part of an interior temperature feedback controller.

3. The device according to claim 1 or 2, **characterized by** a pressure sensor (64) for measuring the pressure of the compressed coolant, and by a coolant pressure feedback controller for feedback control of the coolant pressure to a desired value, wherein the pressure sensor (64) is connected to the electric circuit (76) and the electric circuit comprises the coolant pressure feedback controller.

4. The device according to any one of claims 1 to 3, **characterized by** a further temperature sensor for monitoring the coolant temperature, wherein the further temperature sensor is connected to the electric circuit (76) and the electric circuit comprises a monitoring unit for monitoring the coolant temperature.

5. The device according to any one of claims 1 to 4, **characterized in that**, for detecting a desired value for the temperature of the cooling air exiting from the evaporator (22), the evaporator temperature desired value detecting unit (72) is connected via a bus line (80) to the evaporator temperature feedback controller (74).

6. A motor vehicle comprising
- a motor compartment (77) and an interior (20) which are separated from each other by a wall (78), and
- a device according to any one of the preceding claims,
- wherein the compressor (60) together with the electric motor (62) and the electric circuit (76) is arranged in the motor compartment and the evaporator temperature desired value detecting unit (72) for the evaporator temperature is arranged in the interior (20).

## Revendications

1. Dispositif de régulation d'un circuit de refroidissement d'une installation de climatisation de véhicule automobile, comprenant
- un compresseur (60) pour comprimer un réfrigérant,
- un évaporateur (22) pouvant être parcouru par de l'air pour évaporer le réfrigérant comprimé,
- un moteur électrique (62) pour entraîner le compresseur (60),
- un capteur de température (70) pour mesurer la température de l'air de refroidissement sortant de l'évaporateur (22),
- une unité (72) de détermination d'une valeur de consigne de la température de l'air de refroidissement sortant de l'évaporateur (22), et
- un circuit électrique (76) équipé d'un régulateur de température d'évaporateur (74) pour réguler la température de l'air de refroidissement à la valeur de consigne prescrite par l'unité de détermination de valeur de consigne d'évaporateur (72),
- le circuit électrique (76) étant disposé de manière à être séparé spatialement de l'unité de détermination de valeur de consigne d'évaporateur (72),
**caractérisé en ce que**
- le circuit électrique (76) est disposé dans ou sur un carter du compresseur (60) et/ou du moteur électrique (62).

2. Dispositif selon la revendication 1, **caractérisé en ce que**, pour déterminer une valeur de consigne de température de l'air de refroidissement sortant de l'évaporateur (22), l'unité de détermination de valeur de consigne d'évaporateur (72) est prévue pour être disposée dans un dispositif de commande de climatisation (48), qui est logé dans l'habitacle (20) d'un véhicule automobile en tant qu'élément d'un régulateur de température de l'habitacle.

3. Dispositif selon la revendication 1 ou 2, **caractérisé par** un capteur de pression (64) destiné à mesurer la pression du réfrigérant comprimé et par un régulateur de pression de réfrigérant destiné à réguler la pression du réfrigérant pour lui donner une valeur de consigne, le capteur de pression (64) étant relié au circuit électrique (76) et le circuit électrique comprenant le régulateur de pression de réfrigérant.

4. Dispositif selon l'une des revendications 1 à 3, **caractérisé par** un autre capteur de température destiné à contrôler la température du réfrigérant, l'autre capteur de température étant relié au circuit électrique (76), lequel comporte une unité de contrôle destinée à surveiller la température du réfrigérant.

5. Dispositif selon l'une des revendications 1 à 4, **caractérisé en ce que** l'unité (72) de détermination de la valeur de consigne de température de l'évaporateur, destinée à déterminer une valeur de consigne de température de l'air de refroidissement sortant de l'évaporateur (22), est couplée au régulateur de température d'évaporateur (74) via une ligne de bus (80).

6. Véhicule automobile, comprenant
- un compartiment moteur (77) et un habitacle (20) séparés l'un de l'autre par une paroi (78), et
- un dispositif selon l'une des revendications précédentes,
- le compresseur (60) étant disposé dans le compartiment moteur avec le moteur électrique (62) et le circuit électrique (76), et l'unité (72) de détermination de la valeur de consigne de température de l'évaporateur étant disposée dans l'habitacle (20).
